# EUROPÄISCHE PATENTSCHRIFT

(11) **EP 2 459 936 B1**
(45) Veröffentlichungstag und Bekanntmachung des Hinweises auf die Patenterteilung: **03.04.2013**
(21) Anmeldenummer: 10728699.9
(22) Anmeldetag: 07.07.2010
(51) Int. Cl.: F24D 19/10, F24J 2/40

(54) **SOLARANLAGE MIT MINDESTENS ZWEI SOLARKOLLEKTOREN UNTERSCHIEDLICHER EXPOSITION**
SOLAR APPARATUS WITH AT LEAST TWO SOLAR COLLECTORS WITH DIFFERENT EXPOSURE
INSTALLATION SOLAIRE COMPRENANT AU MOINS DEUX COLLECTEURS SOLAIRES D'EXPOSITION DIFFÉRENTE

(30) Priorität: 29.07.2009 AT 11902009
(43) Veröffentlichungstag der Anmeldung: 06.06.2012
(73) Patentinhaber: VKR Holding A/S, 2970 Hørsholm (DK)
(72) Erfinder: PRACHAR, Thomas, A-9020 Klagenfurt (AT); JEDREJCIC, Stefan, A-9342 Gurk (AT)
(74) Vertreter: Babeluk, Michael
(86) Internationale Anmeldenummer: PCT/EP2010/059692
(87) Internationale Veröffentlichungsnummer: WO 2011/012411

(56) Entgegenhaltungen:
- DE-A1- 10 245 572
- DE-A1- 19 533 475
- DE-A1-102006 017 286
- JP-A- 2003 262 405
- US-A- 4 184 481

## Beschreibung

Die Erfindung betrifft eine Solaranlage mit mindestens zwei Solarkollektoren unterschiedlicher Exposition, einem Verbraucher, einer Hauptzufuhrleitung, die sich in Einzelzufuhrleitungen zu den Solarkollektoren verzweigt und einer Hauptrückführleitung, in die Einzelrückführleitungen von den Solarkollektoren münden, mit einem Verteilventil, das an der Verzweigung der Hauptzufuhrleitung in die Einzelzufuhrleitungen oder an der Verzweigung der Hauptrückführleitung in die Einzelrückführleitungen angeordnet ist, und mit einer Pumpe zur Förderung eines Wärmeträgermediums.

Mehrere in Serie geschaltete Solarkollektoren werden zur Vereinfachung in der Folge als einzelner Solarkollektor angesehen.

Grundsätzlich wird bei der Konzeption von Solaranlagen mit mehreren Solarkollektoren versucht, diese so anzuordnen, dass die Exposition möglichst günstig und gleich ist, wie dies beispielsweise bei Anordnung in gleicher Ausrichtung auf einem südseitigen Dach der Fall ist. In einem solchen Fall können die Solarkollektoren ohne weitere Maßnahmen von einem Wärmeträgermedium parallel oder in Serie angeströmt werden.

In manchen Fällen ist jedoch eine solche optimale Anordnung nicht möglich und einzelne Solarkollektoren weisen eine unterschiedliche Exposition auf. Das häufigste Beispiel einer solchen Situation ist die Installation einer Solaranlage auf einem Gebäude, dessen Dach einen First in Nord-Süd Richtung aufweist. Um eine über den Tagesablauf möglichst gut verteilten Ertrag zu erreichen, werden hier die Solarkollektoren teilweise am ostseitigen Dachabschnitt und teilweise am westseitigen Dachabschnitt befestigt. Es ist offensichtlich, dass eine gleichmäßige Durchströmung der Solarkollektoren ein suboptimales Ergebnis erbringt, da am Morgen die westseitigen Solarkollektoren nicht nur keinen Beitrag zur Erwärmung des Wärmeträgermediums liefern können, sondern auch noch Wärmeverluste auftreten können. In Verlauf des Vormittags werden auch die westseitigen Solarkollektoren bestrahlt, aber in einem ungünstigeren Winkel, und eine gleichmäßige Durchströmung führt letztlich dazu, dass wenig erwärmtes Wärmeträgermedium aus diesen Solarkollektoren dem heißen Wärmeträgermedium aus den anderen Kollektoren zugemischt wird, was den Gesamtwirkungsgrad verschlechtert.

Am Nachmittag und Abend wiederum sind umgekehrt die ostseitigen Solarkollektoren weniger oder nicht in der Lage, zur Wärmegewinnung beizutragen und sind somit Ursache für Verluste.

Es sind aber auch noch andere Beispiele unterschiedlicher Exposition möglich, wie etwa wenn einzelne Gruppen von Solarkollektoren unterschiedliche hydraulische Eigenschaften aufweisen oder zeitweise in unterschiedlicher Weise abgeschattet werden.

Um solchen Bedingungen Rechnung zu tragen, ist bereits vorgeschlagen worden, die Solarkollektoren selektiv ab- und zuzuschalten, indem durch ein Umschaltventil der Zufluss gesteuert wird. Solche früheren Lösungen sind beispielsweise in der JP 2003262405 A oder der US 4,184,481 A beschrieben. Die Temperatur des Wärmeträgermediums schwankt dabei ständig entsprechend dem Ein- und Ausschalten einzelner Strömungswege, so dass eine effiziente Regelung und eine Optimierung des Wärmeertrags nicht möglich sind.

Eine ähnliche Lösung ist in der DE 195 33 475 A offenbart. Auch hier werden einzelne Kollektoren temperaturabhängig zu- oder abgeschaltet.

Um diese Nachteile zu vermeiden sind Solaranlagen bekannt geworden, bei denen die einzelnen Solarkollektoren bzw. Gruppen von Solarkollektoren getrennt voneinander durch eigene Zufuhr- und Abführleitungen versorgt werden. Jeder der Kreisläufe weist eine eigene, separat gesteuerte Pumpe auf, um der unterschiedlichen Exposition Rechnung zu tragen. Eine solche Lösung ist nicht nur apparativ aufwendig, sondern weist auch eine Reihe von Nachteilen auf. Konzeptbedingt sind beispielsweise drehzahlgeregelte Pumpen nur ab einem bestimmten Mindestdurchsatz betreibbar, der je nach Auslegung bei etwa 30% liegt. Damit können die weniger bestrahlen Solarkollektoren nur ganz abgeschaltet werden oder mit einer Mindestdurchflussmenge betrieben werden. Wenn nun die Sonneneinstrahlung nicht ausreicht, um eine entsprechende Erwärmung des Wärmeträgermediums bei diesem Mindestdurchsatz zu gewährleisten, dann treten die oben beschrieben Nachteile auf. Mit anderen Worten kann ein solches System Unterschiede in der Exposition einzelner Solarkollektoren nur dann ausgleichen, wenn diese nicht zu groß sind. Dieses Problem verschärft sich, wenn die Solaranlage in Verbindung mit einer Wärmepumpe betrieben wird, so dass das Wärmeträgermedium je nach Betriebszustand auch auf sehr niedrige Temperaturen abgekühlt werden kann und dann eine hohe Viskosität aufweist. Dies schränkt den Regelbereich der Pumpen unter Umständen auf weniger als 50% ein.

Aufgabe der Erfindung ist es, diese Nachteile zu vermeiden und eine Lösung anzugeben, die einen einfachen Aufbau aufweist und einen optimalen Wirkungsgrad auch dann aufweist, wenn die Sonneneinstrahlung auf die einzelnen Solarkollektoren stark unterschiedlich ist. Eine weitere Aufgabe der Erfindung ist es, ein verbessertes Regelungsverfahren für solche Anlagen anzugeben.

Erfindungsgemäß werden diese Aufgaben dadurch gelöst, dass das Verteilventil als Mischventil ausgebildet ist. Als Mischventil wird allgemein ein Ventil mit einem Hauptanschluss verstanden, von dem der Durchfluss stufenlos auf zwei Zweiganschlüsse aufteilbar ist. Solche Ventile werden beispielsweise in der Heizungstechnik dazu eingesetzt, durch Mischung von kaltem Medium und heißem Medium ein Medium mit genau vorgegebener Temperatur herzustellen.

Im Rahmen der vorlegenden Erfindung weisen die einzelnen Teilströme am Mischventil jedoch im Idealfall die gleiche Temperatur auf, da nur die Volumenströme entsprechend beeinflusst werden.

Wichtig ist es im Rahmen der Erfindung, dass die Durchströmgeschwindigkeit des Wärmeträgermediums durch die Solarkollektoren in einem weiten Bereich von nahezu Null auf einen durch die Auslegung vorgegebenen Maximalwert regelbar ist. Dadurch können auch große Unterschiede zwischen den einzelnen Kollektoren ausgeglichen werden.

Ein Vorteil der vorliegenden Erfindung gegenüber Anlagen mit zwei Pumpen besteht auch darin, dass bei herkömmlicher Anordnung der Solaranlage mit den Solarkollektoren am Dach und den übrigen Komponenten im Keller eines Gebäudes nicht drei sondern nur zwei Steigleitungen benötigt werden, da das Mischventil in unmittelbarer Nähe der Solarkollektoren angeordnet werden kann. Grundsätzlich ist es möglich, das Verteilventil sowohl im Vorlauf als auch im Rücklauf anzuordnen, es ist allerdings bevorzugt, wenn das Verteilventil an der Verzweigung der Hauptzufuhrleitung in die Einzelzufuhrleitungen in unmittelbarer Nähe der Solarkollektoren angeordnet ist. Auf diese Weise kann die thermische Belastung des Verteilventils vergleichsweise gering gehalten werden.

Von besonderem Vorteil ist es, wenn in den Einzelrückführleitungen bzw. in den Solarkollektoren selbst jeweils erste Temperatursensoren angeordnet sind. Dabei ist es besonders günstig, wenn in der Hauptrückführleitung ein weiterer Temperatursensor angeordnet ist. Die erfindungsgemäße Anlage wird einerseits insgesamt geregelt, indem die Drehzahl der Pumpe an das verfügbare Wärmeangebot angepasst wird. Andererseits wird der Durchfluss durch die Solarkollektoren durch Regelung des Mischventils so aufgeteilt, dass die Temperatur des Wärmeträgermediums stromabwärts der Solarkollektoren möglichst gleich ist. An sich ist es möglich, beide Regelungen durchzuführen wenn die Temperatur des Wärmeträgermediums am Kollektorausgang bekannt ist. Dabei beeinflussen allerdings Regelabweichungen beim Mischventil die Regelung der Pumpe da die Gesamttemperatur des Wärmeträgermediums nach Vermischung aus den beiden gemessenen Einzeltemperaturen berechnet werden muss. Dies kann zu Fehlern führen, da die einzelnen Volumenströme nicht direkt bekannt sind und allenfalls aus der jeweiligen Stellung des Mischventils rückgeschlossen werden können. Überdies ermöglicht die mehrfache Temperaturmessung eine verbesserte Fehlerkontrolle. Überdies wird eine erhöhte Genauigkeit der Regelung der Anlage erreicht, wenn die zusätzlichen Temperatursensoren in direkter Nähe zum Verbraucher angeordnet sind, da Wärmeverluste in den Steigleitungen so keine Verzerrung bewirken.

Ein besonderer Vorteil der erfindungsgemäßen Lösung besteht auch darin, dass es bei der Auslegung der Solaranlage nicht mehr erforderlich ist, besonderes Augenmerk auf die hydraulische Gestaltung der parallel geschalteten Solarkollektoren zu legen. Es ist sogar möglich, unterschiedlich große Kollektorfelder ohne besondere Maßnahmen zusammenzuschalten, wenn beispielsweise ost- und westseitig unterschiedliche Platzverhältnisse vorliegen. Durch die erfindungsgemäße Lösung werden diese Unterschiede automatisch berücksichtigt und ausgeglichen, indem die Durchströmung automatisch angepasst wird. Auch Dächer mit unterschiedlichen Dachneigungen können so ohne besondere Maßnahmen mit Solarkollektoren versehen werden, ohne den Anlagenwirkungsgrad zu beeinträchtigen.

Ein besonders hoher Wirkungsgrad kann erreicht werden, wenn die Pumpe als drehzahlgeregelte Pumpe ausgebildet ist, die in der Hauptzufuhrleitung angeordnet ist. Dadurch ist es möglich die Verluste an der Pumpe zu minimieren und eine besonders feine Regelung zu realisieren.

Weiterhin betrifft die Erfindung ein Verfahren zur Regelung einer Solaranlage mit mindestens zwei Solarkollektoren unterschiedlicher Exposition, die über eine gemeinsame Pumpe mit Wärmeträgermedium versorgt werden.

Dieses Verfahren sieht erfindungsgemäß vor, dass die Temperatur des Wärmeträgermediums stromabwärts der Solarkollektoren durch Aufteilung des Volumenstroms des Wärmeträgermediums auf einen einheitlichen Wert geregelt wird. Insbesondere ist diese Regelung dabei so aufgebaut, dass ein erster Regler ein Mischventil ansteuert, das den Durchfluss des Wärmeträgermediums durch die Solarkollektoren aufteilt, um die Temperaturdifferenz stromabwärts der Solarkollektoren so gering wie möglich zu machen. Eine solche Regelung ist besonders einfach, da die beiden Regelkreise weitestgehend voneinander entkoppelt sind und getrennt voneinander ausgelegt und getestet werden können. In der Praxis sind die beiden Regler zumeist als unterschiedliche Softwareabschnitte auf dem selben Steuergerät implementiert, was aber an der logischen Unabhängigkeit nichts ändert.

Ein besonders hoher Wirkungsgrad kann erreicht werden, wenn unabhängig von der Regelung der Temperaturdifferenz eine weitere Regelung der Pumpe erfolgt, die auf Maximierung des Wärmeertrags ausgelegt ist. Der Gesamtertrag einer Solaranlage hängt wesentlich von der Durchströmung der Solarkollektoren ab. Ein maximaler Volumenstrom des Wärmeträgermediums senkt die Temperatur des Wärmeträgermediums am Solarkollektor und bewirkt eine Verringerung der Abstrahlverluste, es ist aber bei mäßiger Sonneneinstrahlung unter Umständen nicht mehr möglich, die Wärme in gewünschter Weise an die Verbraucher abzugeben, da das Temperaturniveau zu niedrig ist. Bei Anlagen mit Wärmepumpen muss diese mehr und mit schlechterer Leistungszahl arbeiten. Unter Berücksichtigung dieser Faktoren kann eine auf maximalen Wärmeertrag abzielende Regelung realisiert werden, die im Prinzip auf einem Modell der Anlage aufbaut und selbstlernend ausgeführt sein kann. Zusätzlich kann man bei der Regelung auf eine Minimierung des Stromverbrauchs abzielen, da bei modernen Hochleistungsanlagen auch die an sich geringe Energiemenge zum Antrieb der Pumpe berücksichtigt wird.

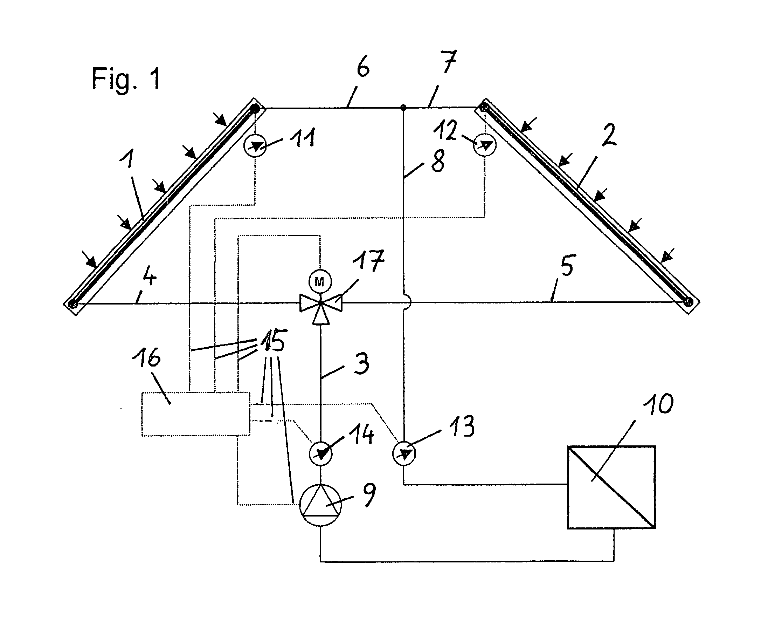

In der Folge wird die vorliegende Erfindung anhand des in der Figur dargestellten Ausführungsbeispiels näher erläutert. Die Figur zeigt ein Schaltungsdiagramm einer erfindungsgemäßen Solaranlage.

Die Solaranlage besteht aus einem ersten Solarkollektor 1 der westseitig ausgerichtet ist und einem zweiten Solarkollektor 2, der ostseitig ausgerichtet ist. Die Solarkollektoren 1, 2 werden über eine gemeinsame Hauptzufuhrleitung 3 versorgt, die sich in zwei Einzelzuführleitungen 4, 5 verzweigt, die zu den einzelnen Solarkollektoren 1, 2 führen. In analoger Weise münden zwei Einzelrückführleitungen 6, 7 in eine Hauptrückführleitung 8.

Das Wärmeträgermedium wird durch eine in der Hauptzufuhrleitung 3 angeordnete drehzahlgeregelte Pumpe 9 zu den einzelnen Solarkollektoren 1, 2 gefördert und durch einen Verbraucher 10 geleitet, der hier allgemein als Wärmetauscher dargestellt ist. Dieser Ausdruck "Verbraucher" 10 steht hier allgemein für jede Komponente, die zur Nutzung der Solarwärme ausgebildet ist, wie etwa einen Heizungspuffer, ein Gerät zur Warmwasserbereitung, den Verdampferteil einer Wärmepumpe oder dgl.

Die Temperatur des Wärmeträgermediums wird am Kollektorausgang bzw. in den Einzelrückführleitungen 6, 7 durch erste Temperatursensoren 11, 12 gemessen. Ein weiterer Temperatursensor 13 ist in der Hauptrückführleitung 8 und noch ein weiterer Temperatursensor 14 ist in der Hauptzufuhrleitung 3 vorgesehen.

Über diverse Steuerleitungen 15 stehen diese Temperatursensoren 11, 12, 13, 14 mit einer Steuerungseinrichtung 16 in Verbindung, die die Pumpe 9 und ein Verteilventil 17 ansteuert, das den Durchfluss in den zwei Einzelzuführleitungen 4, 5 regelt. Dieses Verteilventil 17 ist als Mischventil mit einem Regelbereich von 0% bis 100% ausgeführt. Das Verteilventil 17 ist stetig geregelt und weist eine 3-Punkt-Ansteuerung mit 24 V oder 230 V auf.

Die vorliegende Erfindung ermöglicht es, eine Solaranlage mit geringem Aufwand optimal zu betreiben, auch wenn einzelne Solarkollektoren 1, 2 unterschiedlich beaufschlagt werden.

## Patentansprüche

1. Solaranlage mit mindestens zwei Solarkollektoren (1, 2) unterschiedlicher Exposition, einem Verbraucher (10), einer Hauptzufuhrleitung (3), die sich in Einzelzufuhrleitungen (4, 5) zu den Solarkollektoren (1, 2) verzweigt und einer Hauptrückführleitung (8), in die Einzelrückführleitungen (6, 7) von den Solarkollektoren (1, 2) münden, mit einem Verteilventil (17), das an der Verzweigung der Hauptzufuhrleitung (3) in die Einzelzufuhrleitungen (4, 5) oder an der Verzweigung der Hauptrückführleitung (8) in die Einzelrückführleitungen (6, 7) angeordnet ist, und mit einer Pumpe (9) zur Förderung eines Wärmeträgermediums, **dadurch gekennzeichnet, dass** das Verteilventil (17) als Mischventil ausgebildet ist.

2. Solaranlage nach Anspruch 1, **dadurch gekennzeichnet, dass** das Verteilventil (17) an der Verzweigung der Hauptzufuhrleitung (3) in die Einzelzufuhrleitungen (4, 5) in unmittelbarer Nähe der Solarkollektoren (1, 2) angeordnet ist.

3. Solaranlage nach einem der Ansprüche 1 oder 2, **dadurch gekennzeichnet, dass** in den Einzelrückführleitungen (6, 7) jeweils erste Temperatursensoren (11, 12) angeordnet sind.

4. Solaranlage nach einem der Ansprüche 1 bis 3, **dadurch gekennzeichnet, dass** in der Hauptrückführleitung (8) ein weiterer Temperatursensor (13) angeordnet ist.

5. Solaranlage nach Anspruch 4, **dadurch gekennzeichnet, dass** der weitere Temperatursensor (13) unmittelbar beim Verbraucher (10) angeordnet ist.

6. Solaranlage nach einem der Ansprüche 1 bis 5, **dadurch gekennzeichnet, dass** das Verteilventil (17) einen stufenlosen Regelbereich von 0% bis 100% für jede der Zweigleitungen (4, 5; 6, 7) aufweist.

7. Solaranlage nach einem der Ansprüche 1 bis 6, **dadurch gekennzeichnet, dass** die Pumpe (9) als drehzahlgeregelte Pumpe ausgebildet ist, die in der Hauptzufuhrleitung (3) angeordnet ist.

8. Solaranlage nach einem der Ansprüche 1 bis 7, **dadurch gekennzeichnet, dass** die Solarkollektoren (1, 2) in unterschiedliche Himmelsrichtungen ausgerichtet sind.

9. Solaranlage nach einem der Ansprüche 1 bis 7, **dadurch gekennzeichnet, dass** die Solarkollektoren (1, 2) unterschiedliche Neigungen aufweisen.

10. Solaranlage nach einem der Ansprüche 1 bis 9, **dadurch gekennzeichnet, dass** das Verteilventil (17) als stetig geregeltes Ventil ausgebildet ist.

11. Verfahren zur Regelung einer Solaranlage mit mindestens zwei Solarkollektoren (1, 2) unterschiedlicher Exposition, die über eine gemeinsame Pumpe (9) mit Wärmeträgermedium versorgt werden, **dadurch gekennzeichnet, dass** die Temperatur des Wärmeträgermediums stromabwärts der Solarkollektoren (1, 2) durch Aufteilung des Volumenstroms des Wärmeträgermediums auf einen einheitlichen Wert geregelt wird.

12. Verfahren nach Anspruch 11, **dadurch gekennzeichnet, dass** ein erster Regler ein Mischventil (17) ansteuert, das den Durchfluss des Wärmeträgermediums durch die Solarkollektoren (1, 2) aufteilt, um die Temperaturdifferenz stromabwärts der Solarkollektoren (1, 2) so gering wie möglich zu machen.

13. Verfahren nach einem der Ansprüche 11 oder 12, **dadurch gekennzeichnet, dass** unabhängig von der Regelung der Temperaturdifferenz eine weitere Regelung der Pumpe (9) erfolgt, die auf Maximierung des Wärmeertrags und/oder Minimierung des Stromverbrauchs ausgelegt ist.

14. Verfahren nach Anspruch 13, **dadurch gekennzeichnet, dass** die weitere Regelung durch Einstellung der Drehzahl der Pumpe (9) durchgeführt wird.

## Claims

1. A solar heating system, comprising at least two solar collectors (1, 2) with different exposure, a load (10), a main supply line (3) which branches into individual supply lines (4, 5) to the solar collectors (1, 2), and a main return line (8) into which lead individual return lines (6, 7) from the solar collectors (1, 2), a distribution valve (17) which is arranged at the branch-off of the main supply line (3) to the individual supply lines (4, 5) or at the branch-off of the main return line (8) to the individual return lines (6, 7), and a pump for conveying a heat transfer medium, **characterised in that** the distribution valve (17) is arranged as a mixing valve.

2. A solar heating system according to claim 1, **characterised in that** the distribution valve (17) is arranged at the branch-off of the main supply line (3) to the individual supply lines (4, 5) in the direct vicinity of the solar collectors (1, 2).

3. A solar heating system according to one of the claims 1 or 2, **characterised in that** first temperature sensors (11, 12) are respectively arranged in the individual return lines (6, 7).

4. A solar heating system according to one of the claims 1 to 3, **characterised in that** a further temperature sensor (13) is arranged in the main return line (8).

5. A solar heating system according to claim 4, **characterised in that** the further temperature sensor (13) is arranged directly close to the load (10).

6. A solar heating system according to one of the claims 1 to 5, **characterised in that** the distribution valve (17) has a continuously variable control range of 0% to 100% for each of the branch lines (4, 5; 6, 7).

7. A solar heating system according to one of the claims 1 to 6, **characterised in that** the pump (9) is arranged as a speed-controlled pump which is disposed in the main supply line (3).

8. A solar heating system according to one of the claims 1 to 7, **characterised in that** the solar collectors (1, 2) are oriented in different directions of the sky.

9. A solar heating system according to one of the claims 1 to 7, **characterised in that** the solar collectors (1, 2) have different inclinations.

10. A solar heating system according to one of the claims 1 to 9, **characterised in that** the distribution valve (17) is arranged as a continuously controlled valve.

11. A method for controlling a solar heating system with at least two solar collectors (1, 2) of different exposure which are supplied via a common pump (9) with a heat transfer medium, **characterised in that** the temperature of the heat transfer medium is controlled downstream of the solar collectors (1, 2) by dividing the volume flow of the heat transfer medium to a uniform value.

12. A method according to claim 11, **characterised in that** a first controller triggers a mixing valve (17) which divides the through-flow of the heat transfer medium through the solar collectors (1, 2) in order to keep the temperature difference downstream of the solar collectors (1, 2) as low as possible.

13. A method according to one of the claims 11 or 12, **characterised in that** a further control of the pump (9) occurs independently of the control of the temperature difference, which further control is configured for maximizing the thermal yield and/or for minimizing power consumption.

14. A method according to claim 13, **characterised in that** the further control is performed by setting the speed of the pump (9).

## Revendications

1. Installation solaire comprenant au moins deux collecteurs solaires (1, 2), ayant différentes expositions, un consommateur (10), une conduite d'alimentation principale (3) qui se subdivise en des conduites d'alimentation individuelles (4, 5) allant vers les collecteurs solaires (1, 2) et une conduite de retour principale (8) dans laquelle débouchent des conduites de retour individuelles (6, 7) partant des collecteurs solaires (1, 2), une soupape de répartition (17) qui est montée au niveau de la ramification de la conduite d'alimentation principale (3) et des conduites d'alimentation individuelles (4, 5) ou au niveau de la ramification de la conduite de retour principale (8) avec les conduites de retour individuelles (6, 7), et une pompe (9) pour refouler un agent caloporteur,
**caractérisée en ce que**
la soupape de répartition (17) est réalisée sous la forme d'une soupape mélangeuse.

2. Installation solaire conforme à la revendication 1,
**caractérisée en ce que**
la soupape de répartition (17) est montée au niveau de la ramification de la conduite d'alimentation principale (3) avec les conduites d'alimentation individuelles (4, 5) à proximité immédiate des collecteurs solaires (1, 2).

3. Installation solaire conforme à l'une des revendications 1 et 2,
**caractérisée en ce que**
dans les conduites de retour individuelles (6, 7) sont respectivement montés des premiers capteurs de température (11, 12).

4. Installation solaire conforme à l'une des revendications 1 à 3,
**caractérisée en ce que**
dans la conduite de retour principale (8) est monté un autre capteur de température (13).

5. Installation solaire conforme à la revendication 4,
**caractérisée en ce que**
l'autre capteur de température (13) est monté au voisinage immédiat du consommateur (10).

6. Installation solaire conforme à l'une des revendications 1 à 5,
**caractérisée en ce que**
la soupape de répartition (17) comporte une plage de réglage continue de 0 % à 100 % pour chacune des conduites ramifiées (4, 5, 6, 7).

7. Installation solaire conforme à l'une des revendications 1 à 6,
**caractérisée en ce que**
la pompe (9) est réalisée sous la forme d'une pompe à vitesse réglable qui est montée dans la conduite d'alimentation principale (3).

8. Installation conforme à l'une des revendications 1 à 7,
**caractérisée en ce que**
les collecteurs solaires (1, 2) sont orientés dans différentes directions vers le ciel.

9. Installation solaire conforme à l'une des revendications 1 à 7,
**caractérisée en ce que**
les collecteurs solaires (1, 2) ont des inclinaisons différentes.

10. Installation solaire conforme à l'une des revendications 1 à 9,
**caractérisée en ce que**
la soupape de répartition (17) est réalisée sous la forme d'une soupape réglée en continue.

11. Procédé de régulation d'une installation solaire comportant au moins deux collecteurs solaires (1, 2) ayant des expositions différentes qui sont alimentés en agent caloporteur au moyen d'une pompe (9) commune,
**caractérisé en ce que**
la température du fluide caloporteur en aval des collecteurs solaires (1, 2) est réglée par répartition du flux volumique de l'agent caloporteur sur une valeur uniforme.

12. Procédé conforme à la revendication 11,
**caractérisé en ce qu'**
un premier régulateur commande une soupape mélangeuse (17) qui répartit le flux de fluide caloporteur dans les collecteurs solaires (1, 2) pour rendre la différence de température en aval des collecteurs solaires (1, 2) aussi faible que possible.

13. Procédé conforme à l'une des revendications 11 et 12,
**caractérisé en ce qu'**
indépendamment de la régulation de la différence de température, on effectue une autre régulation de la pompe (9) qui est établie pour une maximalisation de la production de chaleur et/ou sur une minimalisation de la consommation de courant.

14. Procédé conforme à la revendication 13,
**caractérisé en ce que**
l'autre régulation est effectue par réglage de la vitesse de la pompe (9).
